Europäisches Patentamt

European Patent Office

Office européen des brevets

(19)

(11) **EP 0 600 022 B1**

(12) **FASCICULE DE BREVET EUROPEEN**

(45) Date de publication et mention
de la délivrance du brevet:
**31.07.1996 Bulletin 1996/31**

(51) Int Cl.⁶: **G02B 1/10**, C03C 17/34,
C03C 17/42

(21) Numéro de dépôt: 92919051.0

(22) Date de dépôt: **21.08.1992**

(86) Numéro de dépôt international:
**PCT/FR92/00814**

(87) Numéro de publication internationale:
**WO 93/04386 (04.03.1993 Gazette 1993/06)**

(54) **MATERIAU PRESENTANT DES PROPRIETES ANTIREFLET, HYDROPHOBES ET DE RESISTANCE A L'ABRASION ET PROCEDE DE DEPOT D'UNE COUCHE ANTIREFLET, HYDROPHOBE ET RESISTANCE A L'ABRASION SUR UN SUBSTRAT**

ANTIREFLEKTIVES,HYDROPHOBES UND VERSCHLEISSFESTES MATERIAL UND VERFAHREN ZUM AUFBRINGEN VON EINEM ANTIREFLEKTIVEN,HYDROPHOBEN UND VERSCHLEISSFESTEN MATERIAL

MATERIAL HAVING ANTIREFLECTION, HYDROPHOBIC AND ABRASION RESISTANCE PROPERTIES, AND METHOD OF DEPOSITING AN ANTIREFLECTION, HYDROPHOBIC, ABRASION RESISTANT COATING ON A SUBSTRATE

(84) Etats contractants désignés:
**DE ES GB IT NL**

(30) Priorité: **22.08.1991 FR 9110519**

(43) Date de publication de la demande:
**08.06.1994 Bulletin 1994/23**

(73) Titulaire: **COMMISSARIAT A L'ENERGIE ATOMIQUE**
**75015 Paris (FR)**

(72) Inventeur: **FLOCH, Hervé,**
**4 ter, Résidence "Les Cèdres"**
**F-91800 Brunoy (FR)**

(74) Mandataire: **Signore, Robert et al**
**c/o BREVATOME**
**25, rue de Ponthieu**
**75008 Paris (FR)**

(56) Documents cités:
**EP-A- 0 193 269          US-A- 4 929 278**

• **AMERICAN CERAMIC SOCIETY BULLETIN, vol. 69, no. 7, 1990, Columbus, US, pp. 1141-1143; H.G. FLOCH et al.: "Colloidal sol-gel optical coatings"**
• **IBM TECHNICAL DISCLOSURE BULLETIN, vol. 20, no. 12, May 1978, New York, US, page 5233; B.D. WASHO : "Adhesion of tetrafluorethylene to substrate"**

## Description

L'invention concerne un matériau présentant des propriétés antireflet et hydrophobes et étant résistant à l'abrasion. L'invention concerne également un procédé de dépôt d'une couche antireflet, hydrophobe et résistante à l'abrasion sur un substrat organique ou inorganique.

Les substrats organiques ou inorganiques, c'est-à-dire notamment les plastiques ou les substrats vitreux, revêtus d'un film antireflet trouvent une multitude d'applications. Ces substrats ainsi préparés présentent un intérêt tout particulier dans les domaines suivants : les lasers de forte puissance, les applications solaire, thermique et photovoltaïque, les systèmes optiques intégrés ou encore dans des applications architecturales comme les panneaux vitrés en extérieur. Dans le domaine des applications solaires, les substrats vitreux ou en plastique sont d'ores et déjà utilisés dans les systèmes optiques pour minimiser les pertes thermiques, concentrer et focaliser l'énergie lumineuse et enfin protéger certains éléments absorbants.

Comparés aux substrats vitreux, les substrats plastiques sont avant tout moins chers, plus facilement modelables, plus légers et moins fragiles aux chocs.

De très nombreuses solutions pratiques ont été proposées pour déposer des couches minces antireflet sur des substrats mais très peu d'entre elles sont bien adaptées au traitement des matières plastiques.

Les brevets GB 1 444 152, GB 1 530 833 et US 3 996 067 décrivent des techniques classiques pour déposer des couches antireflet sur divers plastiques, à savoir, l'évaporation sous vide, le plasma réactif et les procédés de fluorination. Toutefois, ces techniques n'ont jamais donné lieu à un développement industriel important, car elles sont onéreuses, entraînent des surchauffes locales et donc des déformations et ne permettent le revêtement que d'une face à la fois.

La plupart des solutions proposées nécessitent le chauffage du film antireflet à des températures voisines de quelques centaines de degrés et parfois même à des températures comprises entre 1000 et 1400°C (voir notamment le document US 4 286 024), bien supérieures à celles que peuvent supporter une matière plastique, (stabilité thermique 150°C maximum).

On connaît également d'après le brevet américain 2 466 119, un procédé de préparation de films réflechissants et/ou antireflet multicouches, par hydrolyse et condensation de mélanges d'halogénures de titane et/ou d'alkoxydes de silicium. Le contrôle de la porosité de ces couches s'effectue en faisant varier la température. Toutefois, là encore, l'obtention de couches présentant une bonne résistance mécanique nécessite le chauffage à des températures supérieures à celles que peuvent supporter les plastiques usuels.

Le brevet américain 4 361 598 décrit un procédé de dépôt sol-gel d'un film dense antireflet à base de $SiO_2$/$TiO_2$ sur des cellules de silicium ou d'acier inox. Pour convertir le polymère en oxyde dense, il est nécessaire de procéder à un traitement thermique allant de 300 à 600°C. Ce procédé n'est donc pas susceptible de s'appliquer à des matières plastiques. De plus, la plage d'indices de réfraction couverte par ce brevet varie de 1,4 à 2,4 tandis que pour réaliser un antireflet monocouche sur un substrat plastique, il est nécessaire d'avoir un indice de réfraction d'environ 1,22.

Le brevet américain 4 397 666 décrit un procédé de dépôt de film sol-gel épais, contenant plusieurs composants, en jouant sur la viscosité, par addition d'un agent accroissant celle-ci. L'épaisseur du film obtenu varie entre 0,3 et 1,0 micron et ces épaisseurs sont beaucoup trop élevées par rapport à l'épaisseur de 0,123 micron spécifiée par les équations de Fresnel lorsque l'on souhaite effectuer un dépôt antireflet monocouche sur une matière plastique.

Les brevets US 4 929 278 et US 4 966 812 décrivent un procédé de dépôt de films antireflet sur des substrats plastiques consistant à synthétiser un gel éthanolique dans le système $SiO_2$-$B_2O_3$-$Al_2O_3$-$BaO$ jusqu'à obtenir une certaine complexité moléculaire, puis à reliquéfier ce gel en cassant mécaniquement certains ponts interpolymériques. On obtient ainsi un film poreux à faible indice de réfraction (environ 1,23) réalisé à température ambiante, ce qui permet une adaptation aux substrats en plastique. Toutefois, ce film ne présente qu'une médiocre résistance à l'abrasion.

Par ailleurs, si dans le secteur solaire, les plastiques tels que les polycarbonates, les polyacrylates, les polyallylcarbonates et autres sont particulièrement intéressants, les substrats vitreux sont toutefois également intéressants, notamment dans le domaine de l'optique générale. Or, on comprend facilement qu'à raison d'environ 4 % de pertes en réflexion pour chaque interface air-verre rencontrée (l'indice moyen du verre étant de 1,5), le bilan des pertes pour un système optique complexe est souvent lourd.

En conséquence, les opticiens ont depuis longtemps cherchés à créer des films antireflet par l'usage de procédés physiques tels que l'évaporation ou la pulvérisation sous vide. Toutefois ces procédés sont souvent sophistiqués et coûteux et généralement mal adaptés à la production de grandes séries bon marché.

Les brevets américains 2 348 704, 2 486 431 et 2 490 662 traitent de la préparation de films antireflet sur certains verres par extraction du composant le plus facilement solubilisable sous l'action d'agents de lessivage appropriés. Toutefois, ces procédés, même s'ils permettent d'abaisser l'indice de réfraction, sont limités à des verres d'une composition très spécifique. De même, les brevets américains 4 019 884 et 4 086 074 décrivent des procédés basés sur la capacité de certaines compositions vitreuses à développer une séparation de phases lorsqu'elles sont soumises à une corrosion en température. Ces procédés ne peuvent toutefois être développés que sur des compositions vitreuses encore plus spécifiques que celles utilisées dans les brevets précédents.

D'autres procédés décrits notamment dans les brevets américains 4 273 826, 4 446 171 et 4 535 026 conduisent à la formation de films antireflet peu résistants à l'abrasion et pouvant donc très facilement être endommagés par essuyage.

Enfin, les brevets américains 2 432 484 et 4 271 210 divulguent la possibilité d'utiliser des colloïdes de silice ou d'alumine pour la réalisation de revêtements diélectriques antireflet, permettant d'augmenter la porosité de ces revêtements et donc d'abaisser leurs indices de réfraction. Si ces procédés présentent l'avantage de pouvoir être mis en oeuvre à de basses températures, les couches colloïdales obtenues ont une très faible résistance mécanique et sont particulièrement sensibles à tout contact physique.

En conséquence, l'invention a pour but de remédier à ces inconvénients et de réaliser le dépôt d'une couche antireflet, résistante à l'abrasion, sur un substrat de nature organique ou inorganique, non spécifique.

En conséquence, l'invention concerne un matériau présentant des propriétés antireflet, hydrophobes et de résistance à l'abrasion.

Selon les caractéristiques de l'invention, ce matériau comprend successivement :

- un substrat de nature organique ou inorganique,
- une couche de promoteur d'adhérence réalisée dans un matériau choisi parmi les silanes,
- une couche antireflet formée de colloides de silice enrobés d'un liant siloxane,
- une couche d'agent de couplage réalisée dans un matériau choisi parmi les silazanes, et
- une couche antiabrasive d'un polymère fluoré.

La présence de la couche de promoteur d'adhérence permet de renforcer activement la fixation de la couche antireflet sur le substrat. On réduit ainsi la réflexion spéculaire de substrats traités en augmentant leur transmission. De plus, l'imprégnation du substrat traité avec une couche antiabrasive en polymère fluoré à bas indice de réfraction, maintenue par la couche d'agent de couplage, permet de conserver les propriétés antireflet tout en augmentant la résistance à l'abrasion. En outre, la couche de polymère fluoré donne au matériau son caractère antiabrasif, antiadhésif et hydrophobe.

Les couches antireflet ainsi préparées sont homogènes et exemptes de craquelures et/ou de plans de clivage internes. En conséquence, le film obtenu est suffisamment élastique pour accepter d'éventuelles torsions ou déformations dans le cas où il est appliqué sur un substrat plastique. De plus, ce film antireflet résiste à une atmosphère en chaleur humide et saline et revèle une durée de vie tout à fait convenable une fois immergé dans de l'eau bouillante.

De préférence, la couche d'agent de couplage est réalisée avec de l'hexaméthyldisilazane et la couche antiabrasive est réalisée avec un dérivé du polytétrafluoroéthylène (PTFE) (obtenu par polymérisation du 2,2-bistrifluorométhyl 4,5-difluoro 1,3-dioxole avec le tétra-fluoroéthylène), en raison de ses bonnes propriétés de résistance mécanique et de son caractère hydrophobe.

De préférence, la couche antireflet comprend en masse, entre 70 et 75 % de colloïdes de silice et 25 et 30 % de liant siloxane. Il est également possible d'ajouter à cette couche antireflet un tensio-actif non ionique tel qu'un alkylphénoxypolyéthoxyéthanol. Ceci permet d'accroître la mouillabilité du substrat.

Lorsque le substrat est de nature inorganique et notamment vitreuse, la couche de promoteur d'adhérence est réalisée dans un matériau choisi parmi les époxy-alkoxysilanes.

Lorsque le substrat est de nature organique et notamment en plastique, la couche de promoteur d'adhérence est réalisée dans un matériau choisi parmi les γ-amino-alkylalkoxysilanes et les époxy-oxo-alkyl-alkoxy-silanes.

L'invention concerne également un procédé de dépôt d'une couche antireflet et hydrophobe sur un substrat organique ou inorganique, consistant à :

a) appliquer sur ledit substrat une couche d'un promoteur d'adhérence choisi parmi les silanes,
b) appliquer sur la couche de promoteur une couche sol-gel antireflet constituée par des colloïdes de silice enrobés dans un liant siloxane,
c) effectuer un traitement thermique de l'ensemble de façon à établir les liaisons siloxanes,
d) déposer sur la couche antireflet une couche d'agent de couplage choisi parmi les silazanes,
e) déposer sur la couche d'agent de couplage une couche antibrasive en fluoropolymère, et
f) effectuer un traitement thermique de l'ensemble de façon à éliminer les solvants résiduels.

De préférence, les dépôts des différentes couches sont effectués par trempage ou par enduction centrifuge.

Ces techniques mettent en oeuvre des moyens industriels peu sophistiqués et peu coûteux. En outre, ceci permet de traiter des surfaces relativement grandes et offre des possibilités d'industrialisation en série assez intéressantes. Ceci est avantageux par rapport aux techniques de l'art antérieur consistant à effectuer un traitement par évaporation sous vide, car ces techniques sont très contraignantes du point de vue opératoire et limitatives en ce qui concerne la dimension du substrat à traiter. Le procédé selon l'invention permet d'utiliser des solutions traitantes très pures et de faible viscosité qui s'étalent très facilement sur le substrat à traiter.

Les traitements thermiques sont effectués à une température variant entre 110° et 120°C, c'est-à-dire à des températures relativement faibles et très bien supportées par le substrat notamment lorsque celui-ci est en plastique.

Enfin, de préférence, avant d'effectuer le premier dépôt de promoteur d'adhérence sur le substrat, on procède à une étape de nettoyage consistant à nettoyer le substrat avec une solution aqueuse détergente, à le rincer à l'eau puis à l'alcool. Lorsque le substrat est de nature vitreuse, on améliore le nettoyage par une exposition contrôlée sous rayonnement ultra-violet en présence d'ozone. On obtient ainsi un substrat aux faces très hydrophiles.

L'invention sera mieux comprise à la lecture de la description suivante d'un mode de réalisation préférentiel donné à titre d'exemple illustratif et non limitatif, cette description étant faite en référence aux dessins joints dans lesquels :

- la figure 1 est un schéma illustrant la partie supérieure d'un matériau présentant des propriétés antireflet et hydrophobe selon l'invention,
- la figure 2 est un schéma représentant une étape réactionnelle en cours de procédé, et plus précisément la création des liaisons covalentes entre la couche antireflet et le substrat, et
- la figure 3 illustre la réponse en pourcentage de transmission d'un substrat en verre borosilicate avec et sans traitement antireflet sur les deux faces, à différentes longueurs d'onde.

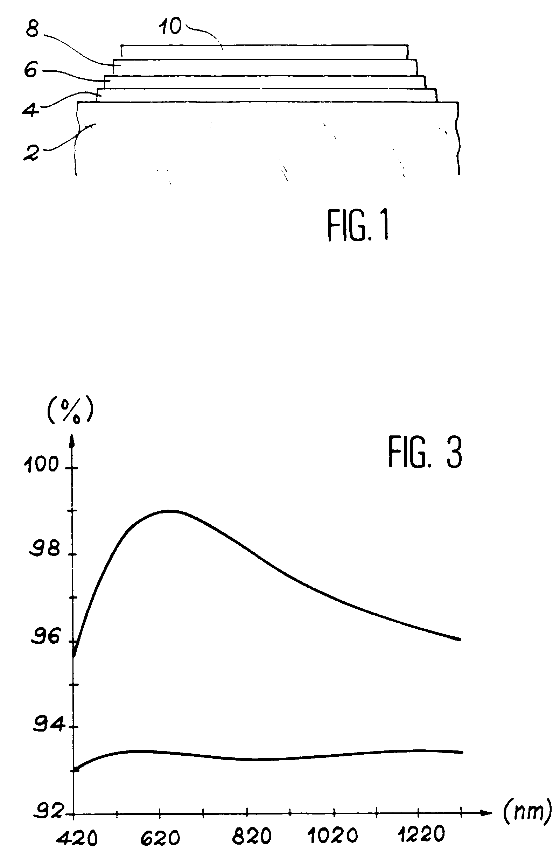

La figure 1 illustre un matériau selon l'invention. Ce matériau comprend un substrat 2 de nature organique ou inorganique, recouvert d'une couche de promoteur d'adhérence 4, d'une couche antireflet 6, d'une couche d'agent de couplage 8 et enfin d'une couche antibrasive 10. Cette figure 1 ne représente qu'une face du matériau afin de simplifier mais dans la pratique après traitement les deux faces sont recouvertes des couches 4, 6, 8 et 10.

Dans la suite de la description, le terme substrat organique désigne plus précisément un substrat plastique, par exemple l'un de ceux choisis parmi les polyacrylates, les polycarbonates, les polyallylcarbonates et les polyamides. Toutefois, cette liste n'est pas limitative et couvre de façon plus générale les matériaux polymères.

Le terme substrat inorganique couvre plus précisément un substrat vitreux, c'est-à-dire par exemple les matériaux amorphes ou même cristallins et notamment la silice, les verres borosilicates, les fluorophosphates, et les phosphates.

La couche antireflet 6 est préparée selon la technique "sol-gel" traduisant le terme "solution-gélatine". On rappelle qu'un sol est un milieu colloïdal et qu'un gel est une masse visqueuse, élastique formée à partir de solutions et de suspensions colloïdales et qui présente une structure de liquide figé. De façon classique, cette couche antireflet 6 est issue d'une suspension de colloïdes de silice monodispersés d'environ 200 Å de diamètre, enrobés avec un liant siloxane polymérique soluble. Les colloïdes et le liant sont synthétisés à partir d'un précurseur moléculaire. Dans l'invention, on préfère utiliser comme précurseur le tétraéthyle orthosilicate. Toutefois, on peut également utiliser le tétraméthylorthosilicate ou d'autres alkoxydes de silicium.

Afin d'assurer une très bonne adhérence entre le substrat organique ou inorganique 2 et la couche antireflet 6, il est indispensable de déposer entre-elles une couche 4 de promoteur d'adhérence. Selon l'invention, on choisira ce promoteur d'adhérence parmi les silanes. Parmi ceux-ci, les époxy-alkoxysilanes sont les plus efficaces lorsque le substrat est inorganique. Au contraire, lorsque le substrat est de nature organique, on préfère utiliser les γ-amino-alkylalkoxysilanes et époxy-oxo-alkyl-alkoxysilanes.

Ces composés à base de silanes qui sont assez facilement hydrolysables doivent être dilués dans un solvant sec, plutôt aprotique, avant leur utilisation. De préférence on utilise le butanol-1-anhydre ou le tétrahydrofurane. Toutefois, d'autres alcools aliphatiques ou des solvants tels que le toluène, les xylènes, l'héxane, l'acétonitrile ou encore l'acétate d'éthyle peuvent être choisis sous réserve d'une bonne compatibilité chimique avec le substrat à traiter.

Bien que la couche de promoteur d'adhérence 4 permette de mieux maintenir la couche antireflet 6 sur le substrat 2, celle-ci n'est toutefois pas suffisante et la couche antireflet 6 reste quelque peu vulnérable à une attaque mécanique. En conséquence, l'invention a consisté également à protéger la couche antireflet 6 par une couche antiabrasive 10 réalisée de préférence dans un polymère fluoré. En effet, en l'absence de la couche antiabrasive, la couche antireflet 6 reste poreuse (porosité d'environ 48 %) et est donc plus vulnérable mécaniquement qu'un film dense. On choisit de préférence parmi ces polymères fluorés, un dérivé du polytétrafluoroéthylène (PTFE) connu sous la marque commerciale de Téflon AF (marque déposée), commercialisée par du Pont de Nemours. Ce dérivé du PTFE en plus d'un faible indice de réfraction (1,29), a la particularité d'être soluble dans certains composés perfluorés tels que les Fluorinert™ (marque déposée), fabriqués par la société 3M, qui jouent donc pour le Téflon AF un rôle de solvant.

Toutefois, avant de déposer ce polymère fluoré sur la couche antireflet 6, il est important de préparer cette couche avec une couche d'agent de couplage spécifique 8. Les silazanes sont les composés les mieux adaptés pour l'accrochage des films organiques. Selon l'invention, on préfère utiliser l'héxaméthyldisilazane dissous dans du tétrahydrofurane. Toutefois, on pourrait également utiliser d'autres promoteurs silazanes ou d'autres solvants aprotiques ou anhydres.

L'invention concerne également le procédé de préparation de ce matériau selon l'invention. Ce procédé consiste premièrement à réaliser une étape de nettoyage du substrat 2. A cet effet, le substrat est minutieusement nettoyé avec une solution aqueuse détergente (contenant à titre d'exemple de l'eau désionisée, du Titron-X™ 100 ou du Rénex™ 690 (marques déposées). Le substrat est ensuite rincé à l'eau désionisée puis à l'alcool isopropylique filtré à 0,2 micron. Lorsque le substrat est de nature inorganique, le nettoyage comprendra une étape supplémentaire consistant à exposer ce substrat sous UV en présence d'ozone. Le substrat inorganique sera alors très hydrophile.

L'étape suivante consiste à appliquer sur le substrat 2 la couche de promoteur d'adhérence choisie parmi les silanes. Cette couche de promoteur est appliquée uniformément sur le substrat 2 soit par trempage, soit par enduction centrifuge à une vitesse variant entre 1500 et 2000 tr/mn. La méthode par dépôt centrifuge est préférable car elle ne nécessite que peu de solution traitante. Toutefois, on pourrait également utiliser d'autres techniques de dépôt. Ce type de dépôt présente l'énorme avantage par rapport à l'art antérieur de pouvoir revêtir des surfaces relativement grandes. En effet, les méthodes classiques de traitement par évaporation sous vide ne permettent pas ou difficilement de traiter des surfaces aussi grandes.

Cette seconde étape est suivie d'une troisième consistant à appliquer sur la couche de promoteur 4, la couche sol-gel antireflet 6 constituée de façon classique par des colloïdes de silice enrobés d'un liant siloxane. Il est d'abord nécessaire de préparer la solution sol-gel en hydrolysant un précurseur par exemple le tétraéthyle orthosilicate, en milieu basique afin d'obtenir une suspension colloïdale de silice qui sera ensuite neutralisée. Parallèlement à cela, on hydrolyse également le précurseur en milieu acide de façon à fabriquer le liant siloxane soluble. Dans la présente invention, la concentration préférée en liant est d'environ 25 à 30 % en masse pour 70 à 75 % de colloïdes. On a constaté que cette plage de concentration permettait d'obtenir des fonctions antireflet satisfaisantes ainsi qu'une bonne résistance mécanique. Ce film composé de colloïdes enrobés d'une colle de silice présente un indice moyen de réfraction d'environ 1,25 (mesure effectuée par spectrophotométrie). Cette valeur est satisfaisante pour la réalisation d'une couche antireflet sur un substrat organique ou inorganique d'un indice voisin de 1,50. On notera que cette couche antireflet 6 est également déposée par trempage ou par épandage centrifuge.

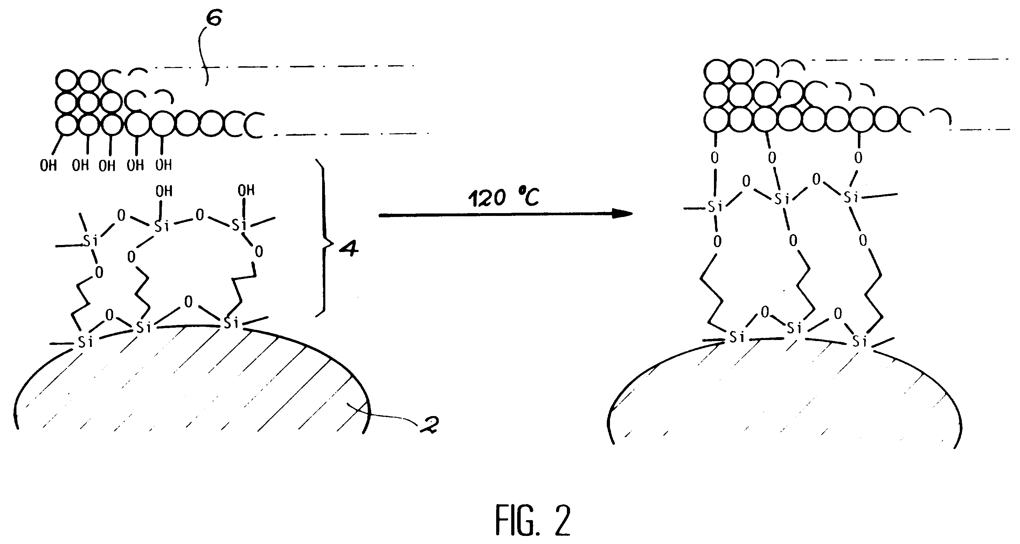

Comme cela est illustré en figure 2, après le dépôt de la couche antireflet 6, il est indispensable de procéder à un traitement thermique aux environs de 110 à 120°C afin d'établir les ponts siloxane entre la couche de promoteur d'adhérence 4 et la couche antireflet 6. Plus précisément les groupes silanols périphériques sont cassés pour créer des liaisons covalentes énergétiques du type silicone.

A ce stade du procédé, on obtient un substrat 2 recouvert sur les deux faces d'une couche antireflet 6 présentant une transmission moyenne de 99 à 99,5 %. Un nettoyage au chiffon ordinaire est possible, sans dégrader la ou les surface(s) traitée(s). Toutefois, la couche antireflet reste encore fragile. Il est en conséquence nécessaire de procéder aux étapes suivantes consistant à déposer une couche d'agent de couplage 8 puis une couche antiabrasive 10. La couche d'agent de couplage 8 est choisie parmi les silazanes. Cette couche 8 est déposée par trempage ou par épandage centrifuge comme cela a été décrit précédemment pour l'application de la couche de promoteur d'adhérence 4. On a en effet constaté que d'autres méthodes de dépôt comme la pulvérisation ou l'étalement par rouleau, donnaient des résultats médiocres quant à l'efficacité du couplage.

On revêt ensuite la couche de silazane 8 par une solution 10 très diluée de Téflon AF (0,5 à 0,8 % en masse). Cette solution est filtrée sur un matelas en fibres de verre. On procède ensuite à une ultime étape de chauffage à une température variant entre 110 et 120°C, afin d'évaporer le solvant résiduel.

On peut également accroître la mouillabilité du substrat de la solution sol-gel antireflet 6 en ajoutant à cette dernière un tensio-actif non ionique tel qu'un alkylphénoxypolyéthoxyéthanol, notamment celui connu sous la marque déposée Triton-X fabriquée chez Rohm et Ass Corporation.

On donne ci-après deux exemples de réalisation de matériaux multicouches selon l'invention réalisés l'un avec un substrat organique et l'autre avec un substrat inorganique. Les opérations de dépôt sont réalisées dans un environnement propre de classe 100 minimum (norme U.S) et sous flux d'air laminaire.

## Exemple 1

On a utilisé un substrat organique 2 en polyallylcarbonate d'un diamètre de 50 mm et d'une épaisseur de 2 mm, présentant un indice de réfraction de 1,50 à une longueur d'onde de 600 nm.

Ce substrat 2 a été nettoyé avec un mélange détergent composé de 0,6 ml de Triton-X 100, de 0,6 ml de Rénex 690, (marques déposées) et de 60 ml d'eau pure désionisée. On a ensuite rincé abondamment ce substrat à l'eau désionisée, puis à l'alcool isopropylique filtré à 0,2 micron.

1) On a préparé une solution A en diluant à 4 % en masse du 3-aminopropyltriéthoxysilane dans du butanol 1 séché sur un tamis moléculaire.
2) On a préparé une solution B en mélangeant 2092,5 g d'éthanol absolu avec 273,42 g de tétraéthylorthosilicate distillé (167°C ; $10^5$ Pa). On a homogénéisé le mélange par agitation durant 5 minutes. On a alors ajouté lentement 72,6 g d'ammoniaque à 28 % minimum en maintenant une agitation régulière. On a laissé l'hydrolyse se produire pendant 48 heures à 25°C. On a alors obtenu un pH d'environ 10,5. On a observé que cette solution B étant devenue opalescente une fois la réaction terminée. La solution B obtenue contient des colloïdes de silice de 20 nm de diamètre environ. On a alors fait refluer le sol colloïdal afin d'éliminer l'ammoniac dissous jusqu'à obtenir un pH de 5,5 environ. Un tel mélange contient 3,3 % de silice en masse.

3) On a préparé une solution C de siloxane en mélangeant 232,5 g d'éthanol absolu, 17,5 g d'eau désionisée, 1,5 g d'HCl concentré et 17 g de tétraéthylorthosilicate distillé.

4) On a mélangé 350 g de la solution B avec la totalité de la solution C afin d'obtenir une solution traitante D. On a laissé celle-ci réagir pendant 48 heures. On a alors obtenu une solution D contenant au total 2,7 % de silice, en masse, dont 70 % sous forme colloïdale et 30 % sous forme de polymères solubles, cette solution ayant un pH d'environ 1,5. On a alors filtré cette solution D sur des fibres de verre.

5) On a préparé une solution E en diluant à 3 % en masse de l'héxaméthyldisilazane pur dans du tétrahydrofurane.

6) On a préparé une solution F en dissolvant du fluoropolymère AF 2400 (E.I. du Pont de Nemours) (marque déposée) dans un solvant perfluoré Fluorinert FC-75 (3M)(marque déposée). La concentration massique en Téflon AF était de 0,075 %.

7) Sur le substrat nettoyé, on a déposé en premier lieu 1 cm$^3$ de la solution A à une vitesse de rotation de 1800 tr/mn. On a laissé sécher pendant 15 à 30 secondes environ et on a appliqué ensuite à la même vitesse, 1 cm$^3$ de solution D. On a alors chauffé le substrat obtenu à 120°C pendant 30 minutes. Ensuite, après refroidissement, on a déposé sur le substrat 1 cm$^3$ de solution E, par induction centrifuge à 1800 tr/mn. On a séché à l'air pendant 15 à 30 secondes puis on a appliqué 1 cm$^3$ de solution F. Enfin, on a traité le matériau obtenu, à 120°C pendant 30 minutes.

Le substat plastique ainsi traité révèle par spectrophotométrie les facteurs de transmission suivants :

$$T = 98,6 \text{ % à } \lambda = 720 \text{ nm}$$

$$T = 99,1 \text{ % à } \lambda = 620 \text{ nm}$$

$$T = 97,9 \text{ % à } \lambda = 520 \text{ nm}$$

Ces valeurs de transmission présentent une erreur absolue de ± 0,5 %.

## Exemple 2

On a utilisé un substrat inorganique 2 en silice d'un diamètre de 50 mm, d'une épaisseur de 8 mm et présentant un indice de réfraction de 1,46 à une longueur d'onde de 600 nm.

Ce substrat 2 a été nettoyé avec une solution détergente composée de 0,6 ml de Triton-X 100, de 0,6 ml de Rénex 690 (marques déposées) et de 60 ml d'eau pure désionisée. Le substrat 2 a ensuite été rincé abondamment à l'eau désionisée, puis à l'alcool isopropylique filtré à 0,2 micron. Enfin, on a placé le substrat dans un photoréacteur UV/ozone (de type PR 100, commercialisé par UVP Inc.), avec un barbottage O$_2$/H$_2$O$_2$ durant un cycle de 5 minutes. On a obtenu ainsi un substrat aux faces très hydrophiles.

1) On a préparé une solution A en diluant à 4,5 % en masse du 3-glycidoxypropyl triéthoxysilane, dans du butanol 1 séché sur un tamis moléculaire.

2) On a préparé une solution B en mélangeant 2092,5 g d'éthanol absolu avec 273,42 g de tétraéthylorthosilicate distillé (167°C ; 10$^5$ Pa). On a homogénéisé le mélange par agitation durant 5 minutes. On a alors ajouté lentement 72,6 g d'ammoniaque à 28 % minimum en maintenant une agitation régulière. On a laissé l'hydrolyse se produire pendant 48 heures à 25°C. On a alors obtenu un pH d'environ 10,5. On a observé que cette solution B était devenue opalescente une fois la réaction terminée. La solution B obtenue contient des colloïdes de silice de 20 nm de diamètre environ. On a alors fait refluer le sol colloïdal afin d'éliminer l'ammoniac dissous jusqu'à obtenir un pH de 5,5 environ. Un tel mélange contient 3,3 % de silice en masse.

3) On a préparé une solution C de siloxane en mélangeant 232,5 g d'éthanol absolu, 17,5 g d'eau désionisée, 1,5 g d'HCl concentré et 17 g de tétraéthylorthosilicate distillé.

4) On a mélangé 350 g de la solution B avec la totalité de la solution C afin d'obtenir une solution traitante D. On a laissé celle-ci réagir pendant 48 heures. On a alors obtenu une solution D contenant au total 2,7 % de silice en masse, dont 70 % sous forme colloïdale et 30 % sous forme de polymères solubles, cette solution ayant un pH d'environ 1,5. On a alors filtré cette solution D sur des fibres de verre.

5) On a préparé une solution E en diluant à 3 % en masse de l'héxaméthyldisilazane pur dans du tétrahydrofurane.

6) On a préparé une solution F en dissolvant du fluoropolymère AF 2400 (E.I. du Pont de Nemours) (marque déposée) dans un solvant perfluoré Fluorinert FC-75 (3M)(marque déposée). La concentration massique en Téflon AF était de 0,075 %.

7) Sur le substrat nettoyé, on a déposé en premier lieu 1 cm$^3$ de la solution A à une vitesse de rotation de 1800 tr/mn. On a laissé sécher pendant 15 à 30 secondes environ et on a appliqué ensuite à la même vitesse 1 cm$^3$ de solution D. On a alors chauffé le substrat obtenu à 120°C pendant 30 minutes. Ensuite, après refroidissement, on a déposé sur le substrat 1 cm$^3$ de solution E par enduction centrifuge à 1800 tr/mn. On a séché à l'air pendant 15 à 30 seconces puis on a appliqué 1 cm$^3$ de solution F. Enfin, on a traité le matériau obtenu, à 120°C pendant 30 minutes.

Le substat vitreux ainsi traité révèle par spectrophotométrie les facteurs de transmission suivants : (voir fi-

gure 3)

$$T = 98{,}7 \% \text{ à } \lambda = 720 \text{ nm}$$

$$T = 99{,}0 \% \text{ à } \lambda = 620 \text{ nm}$$

$$T = 98{,}2 \% \text{ à } \lambda = 520 \text{ nm}$$

Ces valeurs de transmission présentent une erreur absolue de ± 0,5 %

La courbe située dans le bas du graphique représente une courbe comparative avec un substrat non traité.

Les matériaux selon l'invention correspondants aux deux exemples précédents ont été testés en ce qui concerne leurs propriétés de résistance mécanique.

-Test 1 :

Après 10 essuyages de type "Drag Wipe", c'est-à-dire avec un papier buvard imbibé d'éthanol, plaqué sur la surface du substrat puis tiré régulièrement, on a observé aucun dégât sous microscope Reichert MEF 3 x 50.

-Test 2 :

Après 10 essuyages manuels avec un chiffon doux (chiffon 4012 provenant de chez International Clean Products Inc.), imbibé d'éthanol, on a observé également aucun dégât.

-Test 3 :

Après 10 essuyages manuels avec le même chiffon que dans le test 2, mais sec, on a également observé également aucun dégât.

-Test 4 :

Enfin, après collage et arrachage d'un ruban adhésif du type Scoth Magic (marque déposée, gomme fabriqué par Scotch Inc.), on a observé aucun dégât.

-Test 5 :

Après 5 cycles de gommage avec une gomme Mars-Plastic 526 50 (marque déposée, fabriquée par la Société Staedtler) d'une dureté de 20 shores environ, on a observé aucun dégât.

Les propriétés de résistance climatique des matériaux des deux exemples précédents ont également été testées. On a pu constater qu'il n'y avait pas de mouillabilité par l'eau même salée. En conséquence, le film est fortement hydrophobe. Par ailleurs, après avoir laissé le substrat pendant 24 heures à 25°C sous une humidité relative de 96 %, on a observé aucun dégât. Enfin, on a pu observer un début d'attaque du matériau selon l'invention après un séjour de 60 minutes dans de l'eau désionisée portée à ébullition, à une pression de 1 atm ($10^5$ Pa). Toutefois, le pouvoir antireflet reste intact.

Enfin, on a également effectué des tests de tenue au laser. Le seuil d'endommagement des substrats plastiques selon l'invention, est en fait limité par la résistance du substrat à l'action du laser. Sur un substrat en matière plastique, la couche antireflet supporte des densités d'énergie de 7 à 8 J/cm$^2$ à une longueur d'onde de 532 nm pour des monoimpulsions de 3 ns.

Sur un substrat en silice, la couche antireflet supporte des densités d'énergie de 18 à 22 J/cm$^2$ et de 45 à 50 J/cm$^2$, pour des durées d'impulsions de 3 ns et de 10 ns, à une longueur d'onde de 1064 nm (proche infrarouge). En conséquence le seuil d'endommagement est 2 à 3 fois supérieur aux substrats de l'art antérieur.

Des mesures complémentaires effectuées en cadence de tir (fréquence 12 Hz) ont montrés que les matériaux selon l'invention étaient très résistants aux lasers. On a également réalisé des tests à une longueur d'onde de 350 nm (ultraviolet) qui ont révélés des seuls d'endommagement 3 à 5 fois supérieurs aux matériaux antireflet classiques.

## Revendications

1. Matériau présentant des propriétés antireflet, hydrophobes et de résistance à l'abrasion, comprenant successivement :

   - un substrat (2) de nature organique ou inorganique,
   - une couche de promoteur d'adhérence (4) réalisée dans un matériau choisi parmi les silanes,
   - une couche antireflet (6) formée de colloïdes de silice enrobés d'un liant siloxane,
   - une couche d'agent de couplage (8) réalisée dans un matériau choisi parmi les silazanes, et
   - une couche antiabrasive (10) d'un polymère fluoré.

2. Matériau selon la revendication 1, dans lequel la couche d'agent de couplage (8) comprend de l'hexaméthyldisilazane.

3. Matériau selon la revendication 1, dans lequel la couche antiabrasive (10) est réalisée en un dérivé soluble du polytétrafluoroéthylène.

4. Matériau selon la revendication 1, dans lequel la couche antireflet (6) comprend en masse entre 70 et 75 % de colloïdes de silice et 25 et 30 % de liant siloxane.

5. Matériau selon la revendication 1, dans lequel la couche antireflet (6) comprend en outre un tensioactif non-ionique.

**6.** Matériau selon la revendication 5, dans lequel le tensio-actif non-ionique est un alkylphénoxypolyéthoxyéthanol.

**7.** Matériau selon la revendication 1, dans lequel le substrat (2) est inorganique, et la couche de promoteur d'adhérence (4) est réalisée dans un matériau choisi parmi les époxy-alkoxysilanes.

**8.** Matériau selon la revendication 1, dans lequel le substrat (2) est organique, et la couche de promoteur d'adhérence (4) est réalisée dans un matériau choisi parmi les γ-amino-alkyl-alkoxysilanes et les époxy-oxo-alkyl-alkoxysilanes.

**9.** Procédé de dépôt d'une couche antireflet, hydrophobe et résistante à l'abrasion sur un substrat (2) organique ou inorganique, consistant à :

a) appliquer sur ledit substrat (2) une couche d'un promoteur d'adhérence (4) choisi parmi les silanes,
b) appliquer sur la couche de promoteur (4) une couche sol-gel antireflet (6) constituée par des colloïdes de silice enrobés dans un liant siloxane,
c) effectuer un traitement thermique de l'ensemble de façon à établir les liaisons siloxanes,
d) déposer sur la couche antireflet (6) une couche d'agent de couplage (8) choisi parmi les silizanes,
e) déposer sur la couche d'agent de couplage (8) une couche antiabrasive (10) en fluoropolymère, et
f) effectuer un traitement thermique de l'ensemble de façon à éliminer les solvants résiduels.

**10.** Procédé de dépôt selon la revendication 9, dans lequel les dépôts des différentes couches sont effectués par enduction centrifuge.

**11.** Procédé de dépôt selon la revendication 9, dans lequel les dépôts des différentes couches sont effectués par trempage.

**12.** Procédé de dépôt selon la revendication 9, dans lequel les traitements thermiques sont effectués à une température variant entre 110 et 120°C.

**13.** Procédé de dépôt selon la revendication 9, dans lequel la couche d'agent de couplage (8) comprend de l'héxaméthyldisilazane.

**14.** Procédé de dépôt selon la revendication 9, dans lequel le substrat (2) est organique.

**15.** Procédé de dépôt selon la revendication 9, dans lequel le substrat (2) est inorganique.

**16.** Procédé de dépôt selon la revendication 14, dans lequel, avant le dépôt de la couche de promoteur d'adhérence (4), on réalise une étape consistant à :

- nettoyer le substrat (2) avec une solution aqueuse détergente,
- le rincer à l'eau, et
- le rincer à l'alcool.

**17.** Procédé de dépôt selon la revendication 15, dans lequel, avant le dépôt de la couche de promoteur d'adhérence (4), on réalise une étape consistant à :

- nettoyer le substrat (2) avec une solution aqueuse détergente,
- le rincer à l'eau,
- le rincer à l'alcool, et
- l'exposer sous rayonnement ultra-violet en présence d'ozone.

**18.** Procédé de dépôt selon la revendication 14, dans lequel la couche de promoteur d'adhérence (4) est réalisée dans un matériau choisi parmi les γ-amino-alkyl-alkoxysilanes et les époxy-oxo-alkylalkoxysilanes.

**19.** Procédé de dépôt selon la revendication 15, dans lequel la couche de promoteur d'adhérence (4) est réalisée dans un matériau choisi parmi les époxy-alkoxysilanes.

**Patentansprüche**

**1.** Material mit Antireflexions-, Hydrophobie- und Abrasionsbeständigkeits-Eigenschaften, nacheinander umfassend:

- ein Substrat (2) von organischer oder anorganischer Natur,
- eine Schicht eines Haftvermittlers (4), ausgeführt in einem unter den Silanen gewählten Material,
- eine Antireflexionsschicht (6), gebildet aus Siliciumdioxidkolloiden, die von einem Siloxan-Bindemittel umkleidet sind,
- eine Schicht von Kopplungsreagens (8), ausgeführt in einem unter den Silazanen gewählten Material, und
- eine Antiabrasionsschicht (10) aus einem fluorierten Polymer.

**2.** Material nach Anspruch 1, in dem die Schicht von Kopplungsreagens (8) Hexamethyldisilazan umfaßt.

**3.** Material nach Anspruch 1, in dem die Antiabrasionsschicht (10) aus einem löslichen Derivat des Polytetrafluorethylens hergestellt ist.

4. Material nach Anspruch 1, in dem die Antireflexionsschicht (6) der Masse nach zwischen 70 und 75% Siliciumdioxidkolloide und 25 bis 30% Siloxan-Bindemittel umfaßt.

5. Material nach Anspruch 1, in dem die Antireflexionsschicht (6) ferner ein nichtionisches Tensid umfaßt.

6. Material nach Anspruch 5, in dem das nichtionische Tensid ein Alkylphenoxypolyethoxyethanol ist.

7. Material nach Anspruch 1, in dem das Substrat (2) anorganisch ist und die Haftvermittlerschicht (4) in einem unter den Epoxyalkoxysilanen gewählten Material ausgeführt ist.

8. Material nach Anspruch 1, in dem das Substrat (2) organisch ist und die Haftvermittlerschicht (4) in einem unter den $\gamma$-Amino-alkyl-alkoxysilanen und den Epoxy-oxo-alkylalkoxysilanen gewählten Material ausgeführt ist.

9. Verfahren zur Abscheidung einer Antireflexion zeigenden, hydrophoben und abrasionsbeständigen Schicht auf einem organischen oder anorganischen Substrat (2), darin bestehend,

   a) auf genanntem Substrat (2) eine Schicht eines unter den Silanen gewählten Haftvermittlers (4) anzubringen,
   b) auf der Haftvermittlerschicht (4) eine Sol-Gel-Schicht (6) mit Antireflexion anzubringen, bestehend aus Siliciumdioxidkolloiden, die in ein Siloxan-Bindemittel eingebettet sind,
   c) eine thermische Behandlung der Anordnung durchzuführen, um die Siloxanbildungen herzustellen,
   d) auf der Antireflexionsschicht (6) eine Schicht von Kopplungsreagens (8), gewählt unter den Silazanen, abzuscheiden,
   e) auf der Schicht von Kopplungsreagens (8) eine Antiabrasionsschicht (10) aus Fluoropolymer abzuscheiden und
   f) eine thermische Behandlung der Anordnung durchzuführen, um die Lösungsmittelreste zu entfernen.

10. Verfahren zur Abscheidung nach Anspruch 9, in dem die Abscheidungen der verschiedenen Schichten durch Zentrifugenauftragung ausgeführt werden.

11. Verfahren zur Abscheidung nach Anspruch 9, in dem die Abscheidungen der verschiedenen Schichten durch Tauchen ausgeführt werden.

12. Verfahren zur Abscheidung nach Anspruch 9, in dem die thermischen Behandlungen bei einer Temperatur ausgeführt werden, die sich zwischen 110 und 120°C bewegt.

13. Verfahren zur Abscheidung nach Anspruch 9, in dem die Schicht von Kopplungsreagens (8) Hexamethyldisilazan umfaßt.

14. Verfahren zur Abscheidung nach Anspruch 9, in dem das Substrat (2) organisch ist.

15. Verfahren zur Abscheidung nach Anspruch 9, in dem das Substrat (2) anorganisch ist.

16. Verfahren zur Abscheidung nach Anspruch 14, in dem man vor dem Abscheiden der Haftvermittlerschicht (4) einen Schritt ausführt, der darin besteht:

   - das Substrat (2) mit einer wäßrigen Reinigungslösung zu reinigen,
   - es mit Wasser zu spülen und
   - es mit Alkohol zu spülen.

17. Verfahren zur Abscheidung nach Anspruch 15, in dem man vor dem Abscheiden der Haftvermittlerschicht (4) einen Schritt ausführt, der darin besteht:

   - das Substrat (2) mit einer wäßrigen Reinigungslösung zu reinigen,
   - es mit Wasser zu spülen,
   - es mit Alkohol zu spülen und
   - es in Gegenwart von Ozon ultravioletter Strahlung auszusetzen.

18. Verfahren zur Abscheidung nach Anspruch 14, in dem die Haftvermittlerschicht (4) in einem Material ausgeführt wird, das unter den $\gamma$-Amino-alkyl-alkoxysilanen und den Epoxyoxo-alkylalkoxysilanen gewählt ist.

19. Verfahren zur Abscheidung nach Anspruch 15, in dem die Haftvermittlerschicht (4) in einem Material ausgeführt wird, das unter den Epoxy-alkoxysilanen gewählt ist.

## Claims

1. Material having antireflection, hydrophobic and abrasion resistance properties, comprising successively:

   - an organic or inorganic substrate (2),
   - an adhesion promoting coating (4) made from a material chosen from among silanes,
   - an antireflection coating (6) formed from silica colloids coated with a siloxane binder,

- a coupling agent coating (8) formed from a material chosen from among silazanes, and
- an antiabrasive coating (10) of a fluorinated polymer.

2. Material according to claim 1, wherein the coupling agent coating (8) comprises hexamethyl disilazane.

3. Material according to claim 1, wherein the antiabrasive coating (19) is made from a soluble derivative of polytetrafluoroethylene.

4. Material according to claim 1, wherein the antireflection coating (6) contains, by weight, between 70 and 75% silica colloids and between 25 and 30% siloxane binder.

5. Material according to claim 1, wherein the antireflection coating (6) also contains a nonionic surfactant.

6. Material according to claim 5, wherein the nonionic surfactant is an alkyl phenoxypolyethoxyethanol.

7. Material according to claim 1, wherein the substrate (2) is inorganic and the adhesion promoting coating (4) is made from a material chosen from among epoxyalkoxy silanes.

8. Material according to claim 1, wherein the substrate (2) is organic and that the adhesion promoting coating (4) is made from a material chosen from among γ-amino-alkyl-alkoxy silanes and epoxy-oxo-alkyalkoxy silanes.

9. Process for the deposition of an antireflection, hydrophobic coating on an organic or inorganic substrate (2) comprising:

    a) applying to said substrate (2) a coating of an adhesion promotor chosen from among silanes,
    b) applying to the promotor coating (4), a sol-gel antireflection coating (6) constituted by silica colloids coated with a siloxane binder,
    c) performing a heat treatment so as to establish the siloxane bonds,
    d) depositing on the antireflection coating (6), a coupling agent coating (8) chosen from among silazanes,
    e) depositing on the coupling agent coating (8) a fluoropolymer antiabrasive coating (10) and
    f) performing a heat treatment so as to eliminate residual solvents.

10. Deposition process according to claim 9, wherein the deposits of the different coatings are made by centrifugal coating.

11. Deposition process according to claim 9, wherein the deposits of the different coatings are made by dip coating.

12. Deposition process according to claim 9, wherein the heat treatments are performed at a temperature between 110 and 120°C.

13. Deposition process according to claim 9, wherein the coupling agent coating (8) comprises hexamethyl disilazane.

14. Deposition process according to claim 9, wherein the substrate (2) is organic.

15. Deposition process according to claim 9, wherein the substrate (2) is inorganic.

16. Deposition process according to claim 14, wherein prior to the deposition of the adhesion promoting coating (4), a stage is performed which consists of cleaning the substrate (2) with an aqueous detergent solution, rinsing it with water and rinsing it with alcohol.

17. Deposition process according to claim 15, wherein prior to the deposition of the adhesion promoting coating (4), a stage is performed consisting of cleaning the substrate (2) with an aqueous detergent solution, rinsing it with water, rinsing it with alcohol and exposing it to ultravoilet radiation in the presence of ozone.

18. Deposition process according to claim 14, wherein the adhesion promoting coating (4) is made from a material chosen from among γ-amino-alkyl-alkoxy-silanes and epoxy-oxo-alkylalkoxy silanes.

19. Deposition process according to claim 15, wherein the adhesion promoting coating (4) is made from a material chosen from among epoxy-alkoxy silanes.

8

10

6

4

2

FIG. 1

(%)

FIG. 3

100

98

96

94

92

(nm)

420    620    820    1020    1220

FIG. 2

EP 0 600 022 B1